# DEMANDE DE BREVET EUROPEEN

(11) **EP 3 147 344 A1**
(43) Date de publication de la demande: **29.03.2017**
(21) Numéro de dépôt: 16190480.0
(22) Date de dépôt: 23.09.2016
(51) Int. Cl.: C10L 5/14, C10L 5/36, C10L 5/44, C10L 11/00, C10L 11/04, B01J 19/20, B29B 7/38, B29B 7/82

(54) **BÛCHE COMBUSTIBLE COMPORTANT DU MARC DE CAFÉ**

(30) Priorité: 25.09.2015 FR 1559088
(71) Demandeur: Grammont, Valérie, 75015 Paris (FR)
(72) Inventeur: Grammont, Valérie, 75015 Paris (FR)
(74) Mandataire: Cornuejols, Georges

(57) **Abrégé**

Le procédé de fabrication d'une bûche combustible à partir d'une composition granulaire comportant du marc de café, comporte :
- une étape (215) de mélange de grains de marc de café avec un liant solide ou pâteux à 20 °C et
- une étape (220) d'imprégnation par liquéfaction du liant à une température supérieure à sa température de fusion et pendant une durée inférieure à la durée d'imprégnation du coeur d'au moins 50 % en masse des grains de marc de café. Dans des modes de réalisation, l'étape d'imprégnation comporte :
- une étape d'extrusion, en mettant en oeuvre une extrudeuse comportant, sur au moins une vis, une partie amont et une partie avale dans le sens de déplacement de la composition et
- une étape de chauffage pour chauffer la composition granulaire présente dans l'extrudeuse à proximité de la partie avale à une température supérieure à la température de la composition granulaire à proximité de la partie amont.

## Description

### DOMAINE TECHNIQUE DE L'INVENTION

La présente invention concerne un procédé de fabrication de bûches combustibles comportant du marc de café, préférentiellement exempte de fibres cellulosiques. La présente invention couvre aussi la bûche obtenue par la mise en oeuvre de ce procédé.

### ETAT DE LA TECHNIQUE

Une bûche combustible est traditionnellement un morceau de bois débité en rondin ou en quartier, servant notamment à alimenter un feu dans une cheminée. Ces bûches présentent de nombreux inconvénients. Tout d'abord, la combustion du bois génère des particules fines susceptibles d'être à l'origine de maladies respiratoires. De plus, la quantité de monoxyde de carbone (CO) émise est élevée. Enfin, le PCI (acronyme de Pouvoir Calorifique Inférieur, en anglais, lower heating value : LHV) est relativement limité. On rappelle que le pouvoir calorifique inférieur est une propriété des combustibles. Il s'agit de la « quantité de chaleur dégagée par la combustion complète d'une unité de combustible, la vapeur d'eau étant supposée non condensée et la chaleur non récupérée ». Par hypothèse, l'énergie de vaporisation de l'eau dans le combustible et les produits de réaction ne sont pas récupérés. Cette mesure est pratique lorsqu'il s'agit de comparer des combustibles où la condensation des produits de combustion est difficile ou qu'une température plus basse que 150 °C ne peut servir.

Au regard des exigences de plus en plus grandes en matière de développement durable, les quantités de marc collectées sont de plus en plus importantes, nécessitant de trouver des formules de combustibles permettant le recyclage du marc en plus grande quantité. Il convient ainsi de développer une filière de recyclage dédiée au marc, dans laquelle le marc est la matière première principale du produit final et pas seulement un composé.

Le marc de café, en tant que combustible, émet beaucoup moins de rejets que le bois :
- moins de formation de créosote (source de production de suie) que le bois, donc moins de risque de feu de conduit de cheminée,
   - moins d'émission de particules fines (PM10 et PM2,5) à l'origine de maladies respiratoires et
   - moins d'émission de monoxyde de carbone, gaz mortel.

Ainsi, plus un combustible détient de marc de café et moins il est polluant. Dans ce but, il était intéressant de développer une formule sans bois, avec un maximum d'apport en marc de café. Cependant le travail du marc de café est particulièrement délicat.

Un des buts de l'invention est donc d'utiliser des proportions marc de café beaucoup plus importantes pour bénéficier des calories émises en limitant les inconvénients liés au bois tout en recyclant un déchet.

Une fois la composition obtenue, encore faut-il que la compression soit adaptée pour permettre une combustion totale, lente, régulière.

De même, la forme de la bûche peut aussi conduire à une combustion adaptée en synergie avec la compression.

On connaît des bûches combustibles comportant de la sciure de bois et du marc de café, par exemple du document US 2002/189159, qui insiste, dans son paragraphe [0040], dans son tableau 2 et dans chacune de ses revendications indépendantes, sur la nécessité de la présence de la sciure de bois.

On connaît aussi le document US 6 113 662, qui décrit une bûche combustible à base de marc de café, de cire et de composant cellulosique, pour la structuration de la bûche ou de coke, pour en augmenter le pouvoir calorifique.

Chacune des compositions de bûche enseignées par ces documents présentent, atténués, les mêmes défauts, rappelés ci-dessus, que les bûches de bois naturel.

On connaît le document WO 2008/007096, qui concerne des comprimés (« *pellets* ») de matière combustible imprégnés, en surface (« *outmost layer* ») ou intégralement (« *the entire pellet is saturated »)* de produit combustible à base de pétrole. Dans le premier cas appliqué au marc de café, les comprimés imprégnés en surface s'effritent et se désagrègent avant utilisation. Ils ne sont donc pas commercialisables ni utilisables. Dans le deuxième cas, les comprimés de marc de café saturés provoquent, au cours de leur combustion, une importante pollution.

Un but de la présente invention est aussi de trouver un procédé de fabrication industriel, parfaitement reproductible afin de garantir des valeurs aux utilisateurs qui sont d'abord des acheteurs.

### OBJET DE L'INVENTION

La présente invention vise à remédier à tout ou partie de ces inconvénients.

A cet effet, la présente invention vise, selon un premier aspect, un procédé de fabrication d'une bûche combustible à partir d'une composition granulaire comportant du marc de café, qui comporte :
- une étape de mélange de grains de marc de café avec un liant solide ou pâteux à 20 °C et
- une étape d'imprégnation par liquéfaction du liant à une température supérieure à sa température de fusion et pendant une durée inférieure à la durée d'imprégnation du coeur d'au moins 50 % en masse des grains de marc de café.

Un effet technique découle de l'imprégnation du coeur d'au moins de 50 % en masse des grains de marc de café : le liant solide ou pâteux fond et pénètre dans la porosité externe du marc sans atteindre le coeur des grains de marc dont la granulométrie est supérieure à 500 microns. On atteint la fusion du liant et l'imprégnation immédiate pour éviter une démixtion et la séparation de phase entre le solide et le liquide. La bûche obtenue par la mise en oeuvre du procédé de l'invention présente ainsi simultanément des qualités de cohésion mécanique et de faible pollution, même avec des cires issues de l'industrie pétrolière.

On note que l'étape de mélange peut être réalisée à toute température à laquelle le liant, qui est solide ou pâteux à 20 °C, est solide ou pâteux.

Grâce à ces dispositions, l'agglomération de la composition et le chauffage avec profil de température adapté au débit et temps de séjour retenu permet la formation d'agglomérats de marc café imprégnés de liant, par exemple de la cire. Le liant solide ou pâteux à 20 °C fond et pénètre dans la porosité externe du marc sans atteindre le coeur des grains de marc dont la granulométrie est supérieure à 500 microns. On atteint la fusion du liant et l'imprégnation immédiate pour éviter une démixtion et la séparation de phase entre le solide et le liquide. On respecte une montée en température, une température maximale et un temps de traitement associé à un bon mélange.

Dans des modes de réalisation, l'étape d'imprégnation comporte :
- une étape d'extrusion, en mettant en oeuvre une extrudeuse comportant, sur au moins une vis, une partie amont et une partie avale dans le sens de déplacement de la composition et
- une étape de chauffage pour chauffer la composition granulaire présente dans l'extrudeuse à proximité de la partie avale à une température supérieure à la température de la composition granulaire à proximité de la partie amont.

Grâce à ces dispositions, l'agglomération de la composition dans une extrudeuse avec profil de température adapté au débit et temps de séjour retenu permet la formation d'agglomérats de marc café imprégnés de liant, par exemple de la cire. Le liant solide ou pâteux à 20 °C fond et pénètre dans la porosité externe du marc sans atteindre le coeur des grains de marc dont la granulométrie est supérieure à 500 microns. On atteint la fusion du liant et l'imprégnation immédiate pour éviter une démixtion et la séparation de phase entre le solide et le liquide. On respecte une montée en température, une température maximale et un temps de traitement associé à un bon mélange dans l'extrudeuse. Les paramètres de conduite de l'extrudeuse (configuration interne de la vis, température de chaque zone, temps de séjour, vitesse de la vis) permettent préférentiellement d'atteindre une densité d'environ 1000 kg/m³.

Dans des modes de réalisation, le procédé objet de la présente invention comporte, de plus, une étape de mise sous pression de la composition granulaire présente dans l'extrudeuse à proximité de la partie avale à une pression supérieure à la pression à laquelle est soumise la composition granulaire à proximité de la partie amont.

Cette étape de mise sous pression permet de réaliser une meilleure cohésion de la bûche.

Dans des modes de réalisation, au cours de l'étape d'extrusion, on met en oeuvre une extrudeuse comportant, sur au moins une vis, la partie amont présentant un premier pas de vis et la partie avale présentant un deuxième pas de vis inférieur au premier pas de vis.

Ce changement de pas de vis réalise une mise sous pression différentiée.

Dans des modes de réalisation, le procédé objet de la présente invention comporte au moins cinq résistances de chauffages, l'étape de chauffage appliquant, de l'amont vers l'aval, des températures dans les plages de températures successives suivantes :
25°C à 40 °C,
50 °C à 95 °C,
80 °C à 105 °C,
60 °C à 110 °C et
110 °C à 120 °C.

Dans des modes de réalisation, le procédé objet de la présente invention comporte au moins quatre résistances de chauffages, l'étape de chauffage appliquant, de l'amont vers l'aval, des températures dans les plages de températures successives suivantes :
25°C à 40 °C,
50 °C à 75 °C,
80 °C à 95 °C et
110 °C à 120 °C.

L'inventeur a déterminé que ces successions de températures donnent de bons résultats en termes de cohésion, de qualité et de durée de flammes.

Dans des modes de réalisation, l'étape de mélange comporte une étape de dosage de la composition granulaire selon la répartition en masse de 55 à 65 % de marc sec à 12% à 15 % d'humidité et 30 à 40 % de liant.

L'inventeur a découvert que ces compositions donnent de bons résultats en termes de cohésion, de qualité et de durée de flammes et de pollution.

Dans des modes de réalisation, au cours de l'étape de mélange, la majorité, en masse des grains de marc sec présente une granulométrie supérieure à 500 microns.

L'inventeur a déterminé que cette granulométrie donne de bons résultats en termes de cohésion, de qualité et de durée de flammes et de pollution.

Dans des modes de réalisation, la durée de l'étape d'imprégnation est entre 30 secondes et cinq minutes.

Les propriétés mécaniques et esthétiques de la bûche sont aussi optimisées.

Dans des modes de réalisation, le procédé objet de la présente invention comporte une étape de mise en forme finale avec formation de rainures et/ou d'ergots à la surface de la bûche et/ou création d'une ouverture traversante axiale.

Ces modifications de la forme cylindrique initiale améliorent la formation rapide de flammes régulières.

Dans des modes de réalisation, le procédé objet de la présente invention comporte une étape de refroidissement des bûches d'au moins 45 minutes.

Ce refroidissement lent améliore les qualités mécaniques de la bûche.

Dans des modes de réalisation, le procédé objet de la présente invention comporte une étape de pressage des agglomérats dans une presse ou dans un moule avec vérin de tassage.

Les agglomérats sont préférentiellement introduits dans un moule à température que l'on refroidit rapidement pour atteindre le figeage de la cire et la prise de forme définitive de la structure de la bûche. Lors de cette phase, on emprisonne de l'air dans la bûche.

Dans des modes de réalisation, au cours de l'étape de chauffage, on applique successivement les températures suivantes à la composition granulaire 25 °C, 70 °C, 80 °C et 90 °C.

Dans des modes de réalisation, au cours de l'étape de chauffage, on applique successivement les températures suivantes à la composition granulaire 25 °C, 75 °C, 80 °C, 90 °C et 100 °C.

Dans des modes de réalisation, au cours de l'étape de chauffage, on applique successivement les températures suivantes à la composition granulaire 25 °C, 80 °C, 90 °C et 110 °C.

Dans des modes de réalisation, au cours de l'étape de chauffage, on applique successivement les températures suivantes à la composition granulaire 25 °C, 95 °C, 105 °C, 110°C et 120°C.

Dans des modes de réalisation, au cours de l'étape de chauffage, on applique une vitesse de progression de la composition dans l'extrudeuse de 3 mètres par minute.

Dans des modes de réalisation, au cours de l'étape de chauffage, on applique une vitesse de progression de la composition dans l'extrudeuse de 5 mètres par minute.

Selon un deuxième aspect, la présente invention vise un dispositif de fabrication d'une bûche combustible à partir d'une composition granulaire comportant du marc de café, qui comporte :
- un moyen de mélange de grains de marc de café avec un liant solide ou pâteux à 20 °C et
- un moyen d'imprégnation par liquéfaction du liant à une température supérieure à sa température de fusion et pendant une durée inférieure à la durée d'imprégnation du coeur d'au moins 50 % en masse des grains de marc de café.

Les avantages, buts et caractéristiques particulières de ce dispositif étant similaires à ceux du procédé objet de la présente invention, ils ne sont pas rappelés ici.

Dans des modes de réalisation, le moyen d'imprégnation comporte :
- une extrudeuse comportant, sur au moins une vis, une partie amont et une partie avale, dans le sens de déplacement de la composition granulaire et
- un moyen de chauffage pour chauffer la composition granulaire présente dans l'extrudeuse à proximité de la partie avale à une température supérieure à la température de la composition granulaire à proximité de la partie amont.

Dans des modes de réalisation, le dispositif objet de la présente invention comporte, de plus, un moyen de mise sous pression de la composition granulaire présente dans l'extrudeuse à proximité de la partie avale à une pression supérieure à la pression à laquelle est soumise la composition granulaire à proximité de la partie amont.

Dans des modes de réalisation, l'extrudeuse comporte, sur au moins une vis, la partie amont présentant un premier pas de vis et la partie avale présentant un deuxième pas de vis inférieur au premier pas de vis.

Dans des modes de réalisation, le dispositif objet de la présente invention l'extrudeuse est une extrudeuse à bivis.

Selon un troisième aspect, la présente invention vise une bûche obtenue par la mise en oeuvre du procédé objet de la présente invention, qui comporte du marc de café mis en forme cylindrique.

Dans des modes de réalisation, la bûche objet de la présente invention présente une densité comprise entre 0,9 et 1,1.

### BREVE DESCRIPTION DES FIGURES

D'autres avantages, buts et caractéristiques particulières de l'invention ressortiront de la description non limitative qui suit d'au moins un mode de réalisation particulier du procédé, du dispositif et de la bûche objets de la présente invention, en regard des dessins annexés, dans lesquels :
- la figure 1 représente, schématiquement et en coupe selon l'axe de rotation d'une vis, une extrudeuse mise en oeuvre dans des modes de réalisation particuliers du procédé objet de la présente invention,
- la figure 2 représente, en schéma fonctionnel, un dispositif de fabrication de bûches comportant du marc de café, objet de la présente invention,
- la figure 3 représente, sous forme d'un logigramme, des étapes du procédé objet de la présente invention,
- la figure 4 représente, en vue de dessus, une bûche objet de la présente invention et
- la figure 5 représente, schématiquement et en coupe selon l'axe de rotation d'une vis, une extrudeuse mise en oeuvre dans des modes de réalisation particuliers du procédé objet de la présente invention.

### DESCRIPTION D'EXEMPLES DE REALISATION DE L'INVENTION

Dans la description qui va suivre, on prend le cas particulier, et préférentiel, de liant solide ou pâteux à 20 °C constitué de cire. Cependant, la présente invention ne se limite pas à ce type de liant solide ou pâteux à 20 °C. A titre d'exemple, le liant peut comporter de la cire, une paraffine et/ou du jojoba.

Le dispositif de fabrication d'une bûche combustible à partir d'une composition granulaire comportant du marc de café, comporte :
- un moyen de mélange de grains de marc de café avec un liant solide ou pâteux à 20 °C et
- un moyen d'imprégnation par liquéfaction du liant à une température supérieure à sa température de fusion et pendant une durée inférieure à la durée d'imprégnation du coeur d'au moins 50 % en masse des grains de marc de café.

Un effet technique découle de l'imprégnation du coeur d'au moins de 50 % en masse des grains de marc de café : le liant solide ou pâteux fond et pénètre dans la porosité externe du marc sans atteindre le coeur des grains de marc dont la granulométrie est supérieure à 500 microns. On atteint la fusion du liant et l'imprégnation immédiate pour éviter une démixtion et la séparation de phase entre le solide et le liquide. La bûche obtenue par la mise en oeuvre du procédé de l'invention présente ainsi simultanément des qualités de cohésion mécanique et de faible pollution, même avec des cires issues de l'industrie pétrolière.

Dans la description qui va suivre, le moyen d'imprégnation est une extrudeuse munie de moyens de chauffages (résistances chauffantes). Cependant, la présente invention ne se limite pas à ce type de moyen d'imprégnation mais couvre aussi les malaxeurs chauffants, les mélangeurs suivis de cuves thermo régulées, par exemple

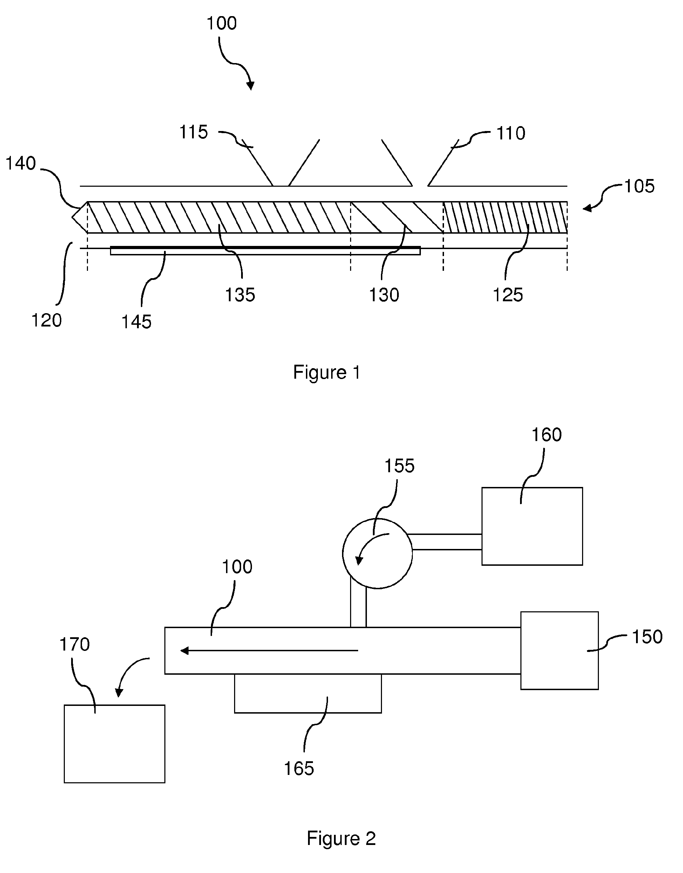

On observe, en figure 1, une extrudeuse 100 comportant au moins une vis 105 mise en rotation par un moteur (voir figure 2). L'extrudeuse 100 est munie d'une ouverture de gavage latérale 110 et d'une trémie de dégazage latérale obturée 115. L'extrudeuse 100 se termine par une sortie 120 de matériau compressé, chauffé et mis en forme.

Partant de l'extrémité de la vis 105 qui est reliée au moteur, la vis 105 comporte, successivement :
- une partie de refoulement 125,
- une partie de compression amont 130,
- une partie de compression avale 135 et
- une extrémité sensiblement conique 140 en regard de la sortie de matériau 120.

La partie de refoulement 125 a pour rôle d'éviter qu'une partie du matériau à compresser se déplace vers le moteur. Le pas de vis de la vis 105 est, dans la partie de refoulement 125, le plus faible.

La partie de compression amont 130 pousse vers la partie de compression avale le matériau entrant dans l'extrudeuse 100 par l'ouverture de gavage latérale 110. Le pas de vis de la vis 105 est, dans la partie de compression amont 130, le plus élevé.

La partie de compression avale 135 pousse le matériau comprimé vers la sortie 120. Le pas de vis de la vis 105 est, dans la partie de compression avale 135, inférieur au pas de vis de la partie de compression amont.

La paroi externe de l'extrudeuse 100 est munie d'un moyen de chauffage 145, généralement constitué de résistances électriques alimentées par une alimentation électrique de type connu.

On rappelle, ici, le principe de l'extrusion "classique" : dans une telle machine mono-vis, la matière subit trois phénomènes :
- un transfert et une compression de la matière grâce à la rotation de la vis,
- une montée en température en fonction du moyen de chauffage,
- une compression en sortie plus ou moins importante selon la filière.

Préférentiellement, on met en oeuvre une extrudeuse à bi-vis, dans laquelle la matière subit en plus un malaxage avec plus ou moins de compression (mono-vis, bi-vis, pas de vis plus ou moins large) pendant le transfert.

On donne, ci-après, des exemples de dimensions qui peuvent être mis en oeuvre, dans une extrudeuse bivis corotative :
- distance entre l'entrée de gavage 110 et la sortie 120 : 500 mm.,
- pas de vis de la partie avale de compression de 33 mm.,
- pas de vis de la partie amont de compression 25 mm.

L'étape de mélange comporte préférentiellement une étape de dosage de la composition granulaire selon la répartition en masse de 55 à 65 % de marc sec à 12% à 15 % d'humidité et 30 à 40 % de liant.

Dans cette configuration, chaque élément de chaque vis 105 et le moteur qui fait tourner chaque vis, constituent un moyen de mise sous pression de la composition granulaire présente dans l'extrudeuse à proximité de la partie avale à une pression supérieure à la pression à laquelle est soumise la composition granulaire à proximité de la partie amont.

On observe, en figure 2, une extrudeuse 100, un moteur 150, un gaveur 155 alimenté par un doseur pondéral 160, un moyen de chauffage 165 et un moyen 170 de mise en forme et de refroidissement des bûches sortant de l'extrudeuse 100.

Le doseur pondéral 160 est, par exemple, de type Ktron (marque déposée) avec un débit de 10 kg/heure alimentant la trémie du gaveur 155.

Le moyen de chauffage 165 comporte, par exemple, une pluralité de résistances alimentées indépendamment en électricité pour chauffer, indépendamment, différentes parties successives de l'extrudeuse de l'amont vers l'aval, et la matière qu'elles contiennent.

Le moyen de chauffage 165 chauffe la composition granulaire présente dans l'extrudeuse à proximité de la partie avale 135 à une température supérieure à la température de la composition granulaire à proximité de la partie amont 130.

On donne, ci-après, deux exemples de températures des résistances de l'amont vers l'aval de l'extrudeuse :
- température de quatre résistances de l'extrudeuse : 25°, 50°, 80° et 110°
- température de quatre résistances de l'extrudeuse : 40°, 75°, 95° et 115°

La granulométrie du marc sec est préférentiellement telle que au moins 50 %, en masse, des grains de marc de café ont une granulométrie supérieure à 500 microns.

Préférentiellement, la composition comporte un agent régulateur de combustion parmi les amidons et notamment la fécule de pomme de terre, et/ou l'amidon de blé et/ou de maïs. Le rôle de cet agent régulateur est de retarder la combustion, par exemple par cokéfaction.

Plus généralement, on ajoute un agent de cohésion et/ou régulateur de combustion parmi les composés cellulosiques ou les composés de chaînes de molécules de D-glucose, plus particulièrement, les glucides complexes (polysaccharide), par exemple un amidon, et notamment la fécule de pomme de terre, et/ou l'amidon de blé et/ou de maïs.

Un additif retenu est de l'amidon qui est pour la majorité des essais un amidon de maïs. D'autres produits ont été testés :
- amidon de blé Chantor (marque déposée)
- fécule de pomme de terre Roquette (marque déposée)
- amidon RG de Roquette (marque déposée).

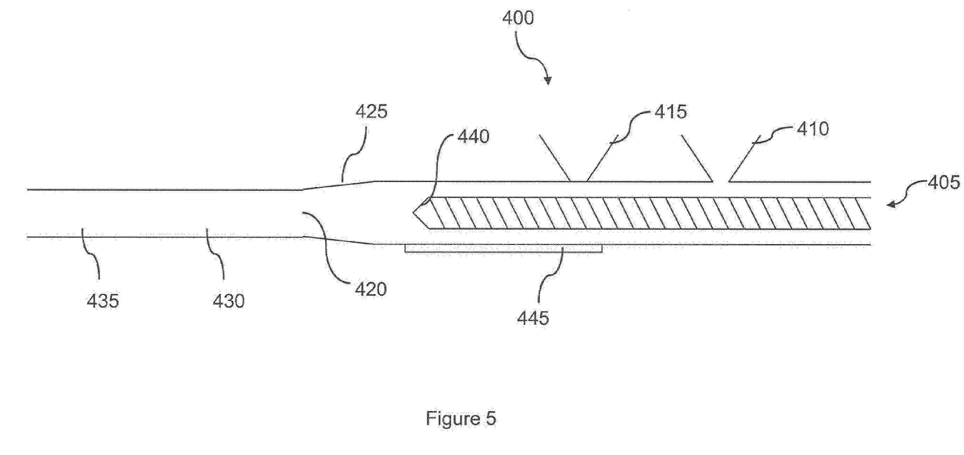

On observe, en figure 5, une autre extrudeuse 400 comportant au moins une vis 405 mise en rotation par un moteur (voir figure 2). L'extrudeuse 400 est munie d'une ouverture de gavage latérale 410 et d'une trémie de dégazage latérale obturée 415. L'extrudeuse 400 se termine par une sortie 420 de matériau compressé, chauffé et mis en forme à l'extrémité d'un cône 425.

Le pas de vis de la vis 405 est constant sur toute sa longueur.

Les caractéristiques techniques de cette extrudeuse 400 sont les suivantes :
- bi-vis de diamètre 65 mm, de conformation régulière (pas de changement de pas de vis),
- avec ou sans malaxeurs,
- longueur de la vis : 1600 mm au total dont 700 mm de passage de la matière à froid et 900 mm à chaud (en regard des résistances),
- cône de sortie : diamètre en entrée : 120 mm et réduction jusqu'à 80 mm de diamètre final de la bûche,
- longueur entre le début et la fin du cône : 90 mm.
- tubulaire 430 de sortie de diamètre 80 mm et de longueur totale 280 mm.
- gouttière 435 de refroidissement sur environ un mètre de long.

Dans d'autres modes de réalisation, on utilise :
- une extrudeuse mono-vis avec cinq résistances indépendantes,
- une longueur de la vis d'environ deux mètres,
- une température des résistances de 150°C,
- une durée de passage du mélange dans la zone de chauffe : entre 30 secondes et cinq minutes,
- en sortie, une filière de 80 mm. de diamètre et
- un entrefer régulier (par exemple de hauteur maximale de 5 mm).

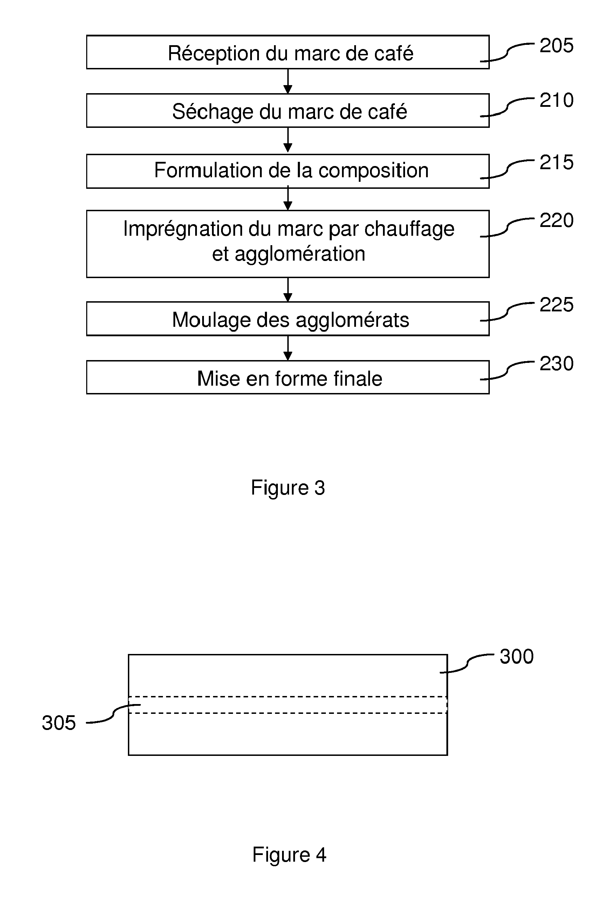

Comme illustré en figure 3, dans un mode de réalisation, le procédé de fabrication de bûches comporte :
- une étape 205 de réception du marc de café, élimination des particules métalliques et plastiques par tamisage, et homogénéisation des lots,
- une étape 210 de séchage du marc de café pour atteinte une humidité entre 10 % à 20 %, préférentiellement d'environ 15 %,
- une étape 215 de formulation de la composition par mélange de marc de café, de cire et, éventuellement, agent régulateur de combustion,
- une étape 220 d'imprégnation par liquéfaction du liant à une température supérieure à sa température de fusion et pendant une durée inférieure à la durée d'imprégnation du coeur d'au moins 50 % en masse des grains de marc de café.

On note que l'étape de mélange 215 peut être réalisée à toute température à laquelle le liant, qui est solide ou pâteux à 20 °C, est solide ou pâteux.

Dans des modes de réalisation, l'étape 220 d'imprégnation comporte :
- une étape d'extrusion, en mettant en oeuvre une extrudeuse comportant, sur au moins une vis, une partie amont et une partie avale dans le sens de déplacement de la composition et
- une étape de chauffage pour chauffer la composition granulaire présente dans l'extrudeuse à proximité de la partie avale à une température supérieure à la température de la composition granulaire à proximité de la partie amont.

On réalise ainsi une agglomération dans une extrudeuse avec profil de température adapté au débit et temps de séjour retenu : cette étape 220 comporte une formation d'agglomérats de marc café imprégnés de cire. La cire doit fondre et pénétrer dans la porosité interne du marc. On y atteint la fusion de la cire et l'imprégnation immédiate pour éviter une démixtion et la séparation de phase entre le solide et le liquide. On respecte une montée en température, une température maximale et un temps de traitement associé à un bon mélange dans l'extrudeuse. Les paramètres de conduite de l'extrudeuse (configuration interne de la vis, température de chaque zone, temps de séjour, vitesse de la vis) permettent d'atteindre une densité d'environ 1000 kg/m³
- une étape 225 de moulage par pressage, tassage ou arasement des agglomérats dans un moule avec, éventuellement un vérin de tassage : les agglomérats sont introduits dans un moule à température que l'on refroidit rapidement pour atteindre le figeage de la cire et la prise de forme définitive de la structure de la bûche. Lors de cette phase, on emprisonne de l'air dans la bûche.
- une étape 230 de mise en forme finale : formation de rainures (ou ergots) à la surface de la bûche et/ou de création d'un trou axial pour faciliter l'accroche de la flamme lors de la combustion.

Plus globalement les opérations unitaires envisagées sont :
1. Séchage
   a. Réception du marc de café brut en sac dans container 200 litres
   b. Vidange et ouverture des sacs et transfert dans un big bag
   c. Stockage tampon en big bag
   d. Transfert vers sécheur par gerbeur ou transpalette
   e. Déchargement big bag pour alimentation trémie sécheur
   f. Séchage
   g. Transfert par vis pour chargement big bag produit séché
   h. Stockage tampon avant formulation
2. Formulation
   a. Transfert et dosage marc séché vers mélangeur
   b. Transfert et dosage de la cire vers mélangeur
   c. Transfert et dosage de l'amidon vers mélangeur
3. Mélange
   a. Vidange et transfert par vis pour chargement big bag produit formulé
   b. Stockage tampon avant extrusion
4. Extrusion
   a. Transfert et dosage produit formulé vers trémie de l'extrudeuse
   b. Extrusion et production d'agglomérats de marc avec cire
5. Mise en moule
   a. Remplissage de moule par barillet
   b. Refroidissement avant démoulage
6. Mise en sachet et en carton
7. Conditionnement
8. Stockage
9. Transport/transfert

Pour la mise enforme des bûches, le principe retenu est de disposer d'un système de barillet pour mise en forme en pas à pas avec refroidissement dans l'eau, comprenant
- une roue à alvéoles,
- un ensemble de deux flasques avec chemin de glissement,
- un motoréducteur pour rotation de l'ensemble,
- un vérin pour accompagnement du produit pendant phase de remplissage,
- un vérin d'expulsion en sortie du temps de refroidissement,
- un ensemble de bac à eau avec pompe de recirculation,
- un échangeur à plaque pour refroidissement température eau,
- un châssis et
- une armoire de contrôle commande.

En ce qui concerne le démoulage, la matière prend au moins 45 minutes pour être bien solide et permettre le démoulage avec le vérin. Cette durée minimale de refroidissement permet un démoulage correct sans résidu qui reste collé dans le tube. Une fois la bûche totalement refroidie, un retrait de diamètre de 1 à 2 mm apparaît, ce qui donne un diamètre extérieur pour la bûche de 78 mm à 79 mm. En variante, on fend les tubes dans le sens de la longueur pour faciliter le démoulage.

Le tableau suivant regroupe les conditions opératoires de l'extrudeuse pour six conditions de températures dans le fourreau référencées. Pour chaque condition de températures, on indique les températures spécifiques des cinq zones décrites précédemment. Ensuite, on fait varier la vitesse de la vis (V1 à V3) agissant ainsi directement sur le temps de passage dans l'extrudeuse, mais également sur le mélange interne. Le pas de vis considéré ici mesure 25 mm, si bien que 80 t/min représente deux mètres par minute, 120 t/mn 3 m/mn et 200 t/mn, 5 m/mn.

| | | |
|---|---|---|
| T1 | 25/50/50/60/70°C | V1= 80 t/min V2 = 120 t/min V3 = 200 t/min |
| T2 | 25/60/60/70/80°C | Idem |
| T3 | 25/70/70/80/90°C | Idem |
| T4 | 25/75/80/90/100°C | Idem |
| T5 | 25/80/80/90/110°C | Idem |
| T6 | 25/95/105/110/120°C | Idem |

Préférentiellement, on applique des températures inférieures ou égales à 120° pour ne pas dégrader le produit. On peut donc définir les plages mini et maxi de température par :

| | | | | | |
|---|---|---|---|---|---|
| Températures minimales : | 25 | 50 | 50 | 60 | 70 C° |
| Températures maximales : | 25 | 95 | 105 | 110 | 120 C° |

On donne, ci-dessous, un tableau de résultats obtenus et un tableau de compositions particulières de la matière granulaire introduite dans l'extrudeuse.

| | | | | Mesures process | | | |
|---|---|---|---|---|---|---|---|
| | Formulation | Débit machine (kg/h) | Vitesse vis (t/min) | T° matère dans le fourreau (°C) | P mat (bar) | Couple Vis (%) | T° matère en sortie (°C) |
| T1 | GF 09 | 10 | 80 | 67 | 25 | 36 | ? |
| 25/50/50/60/70 °C | | 10 | 120 | 67 | 23 | 34 | ? |
| | | 10 | 200 | 67 | 25 | 47 | 50 |
| | GF21 | 10 | 80 | 68 | 27 | 35 | 52 |
| | | 10 | 120 | 69 | 25 | 34 | 52 |
| | | 10 | 200 | 67 | 25 | 47 | 52 |
| T2 | GF 09 | 10 | 80 | 76 | 26 | 35 | 55 |
| 25/60/60/70/80 °C | | 10 | 120 | 74 | 23 | 34 | 53 |
| | | 10 | 200 | 74 | 23 | 34 | 53 |
| | | 5 | 200 | 77 | 25 | 46 | 65 |
| | GF21 | 10 | 80 | 77 | 25 | 36 | 54 |
| | | 10 | 120 | 74 | 27 | 34 | 58 |
| | | 10 | 200 | 76 | 23 | 34 | 58 |
| | | 5 | 200 | 76 | 23 | 44 | 60 |
| T3 | GF 09 | 10 | 80 | 87 | 25 | 36 | 74 |
| 25/70/70/80/90 °C | | 10 | 120 | 88 | 23 | 34 | 70 |
| | | 10 | 200 | 88 | 23 | 44 | 70 |
| | | 5 | 200 | 86 | 23 | 43 | 74 |
| | GF21 | 10 | 80 | 86 | 23 | 35 | 72 |
| | | 10 | 120 | 87 | 23 | 34 | 69 |
| | | 10 | 200 | 85 | 25 | 45 | 73 |
| T4 | GF 09 | 10 | 80 | 96 | 25 | 34 | 84 |
| 25/75/80/90/100 °C | | 10 | 120 | 98 | 23 | 34 | 80 |
| | | 10 | 200 | 97 | 25 | 47 | 81 |
| | | 5 | 200 | 96 | 23 | 53 | 87 |
| | GF21 | 10 | 80 | 95 | 24 | 35 | 81 |
| | | 10 | 120 | 102 | 25 | 34 | 81 |
| | | 10 | 200 | 95 | 24 | 43 | 81 |
| T5 | GF 09 | 10 | 80 | 108 | 25 | 35 | 90 |
| 25/80/80/90/100/110 °C | | 10 | 120 | 107 | 23 | 34 | 90 |
| | | 10 | 200 | 103 | 25 | 43 | 95 |
| | GF21 | 10 | 120 | 104 | 25 | 34 | 90 |
| | | 10 | 200 | 103 | 26 | 49 | 91 |
| T6 | GF 09 | 10 | 80 | 115 | 26 | 35 | 98 |
| 25/95/105/110/120 °C | | 10 | 120 | 111 | 25 | 34 | 99 |
| | GF21 | 10 | 80 | 111 | 25 | 35 | 100 |
| | | 10 | 120 | 110 | 25 | 40 | 98 |
| | | 10 | 200 | 109 | 24 | 46 | 100 |
| T7 | GF 09 | 8 | 35 | ? | ? | ? | ? |
| 25/115/125/135/120 °C | | | | | | | |

**Tableau 1 : Formulations élaborées**

| **Formulation (%)** | | | | |
|---|---|---|---|---|
| **Référence** | **marc** | **cire** | **amidon** | **sciure** |
| GF1 | 60 | 30 | 5 | 5 |
| GF2 | 60 | 35 | 2,5 | 2,5 |
| GF3 | 65 | 25 | 5 | 5 |
| GF4 | 60 | 35 | 5 | 0 |
| GF5 | 65 | 30 | 5 | 0 |
| GF6 | 63 | 35 | 2 | 0 |
| GF7 | 68 | 30 | 2 | 0 |
| GF8 | 65 | 35 | 0 | 0 |
| GF9 | 64 | 31 | 5 | 0 |
| GF10 | 65 | 28 | 7 | 0 |
| GF11 | 67 | 28 | 5 | 0 |
| GF12 | 67 | 30 | 3 | 0 |
| GF13 | 70 | 25 | 5 | 0 |
| GF14 | 70 | 28 | 2 | 0 |
| GF15 | 72 | 26 | 2 | 0 |
| GF16 | 72 | 28 | 0 | 0 |
| GF17 | 72 | 24 | 2 | 0 |
| GF18 | 71,4 | 28,6 | 0 | 0 |
| GF19 | 70,4 | 28,1 | 1,5 | 0 |
| GF20 | 69,3 | 27,7 | 3 | 0 |
| GF21 | 67,9 | 27,1 | 5 | 0 |

On constate que :
- pour la formulation GF9, il faut attendre la condition opératoire T3 et la vitesse V3 (200 tr/mn) pour obtenir un aspect lisse alors qu'il faut attendre pour GF 21 d'être sur une température de T4 pour avoir à peu prés le même aspect. Au global, on obtient de très beaux produits pour le GF9 à partir de T5, tandis que pour GF21 il faut atteindreT6.
- les vitesses V2 et V3 apportent une meilleure cohésion et tenue que la vitesse V1,
- un test de chute d'une bûche GF21 de 80 cm sur le sol montre une bonne résistance globale avec une fracturation du produit seulement en deux parties,
- l'aspect plus lisse avec un effet de retrait sur le diamètre intervient à partir du produit GF9T3V3 et
- la compression de 0,88 bar sur les bûches avec le vérin à partir de la gamme T4 jusqu'a la gamme T6 fait perdre environ 2,5 cm sur longueur de la bûche une fois séchée

On donne, ci-après, un tableau de l'état physique du produit en sortie

| Gamme d'essai | aspect | couleur | spécifique cire | cohésion |
|---|---|---|---|---|
| Etat physique du produit en sortie sous la gamme T° = T1 | Mal agrégé | Marron non brillante | Au démoulage des traces de cire mal agglomérée | Mauvaise aspect non compact |
| Etat physique du produit en sortie sous la gamme T° = T2 | Mal agrégé | Marron non brillant | Trace de cire mal agglomérée | Se délite et s'effrite |
| Etat physique du produit en sortie sous la gamme T° = T3 | Mal agrégé | Brillant mais non régulier | Trace de cire mal agglomérée sur 50 % de la bûche | Pas lisse très rugueux |
| Etat physique du produit en sortie sous la gamme T°=T4 | Agrégats collants | Noir et fondue brillante | cire fondue bien mélangée | 30% sur la basse n'est pas lisse |
| Etat physique du produit en sortie sous la gamme T° = T5 | Agrégats collants | Noir et brillante | Cire fondue bien mélangée | La bûche est lisse sur 100% de la surface |
| Etat physique du produit en sortie sous la gamme T° = T6 | Agrégats collants | Noir et brillante | Cire fondue bien mélangée | La bûche est lisse sur 100% de la surface |
| Etat physique du produit en sortie sous la gamme T° = T7 | Liquide | Noir | La cire coule aspect d'essorage | |

On donne, ci-après, un tableau de mesures de masse volumique des bûches

| | | | Diamètre mm | Hauteur mm | Masse g | Masse vol kg/m3 |
|---|---|---|---|---|---|---|
| | GF09 | V1 80 trs/min | délité | | | |
| | | V3 200 trs/min | délité | | | |
| T1 | GF21 | V1 80 trs/min | délité | | | |
| | | V2 120 trs/min | délité | | | |
| | | V3 200 trs/min | délité | | | |
| | GF 09 | V1 80 trs/min | délité | | | |
| | | V2 120 trs/min | 80 | 190 | 620 | 649 |
| | | V3 200 trs/min | délité | | | |
| T2 | | V3 200 trs/min 5kg/h | délité | | | |
| | GF21 | V1 80 trs/min | 78 | 250 | 884 | 740 |
| | | V2 120 trs/min | délité | | | |
| | | V3 200 trs/min | 80 | 265 | 852 | 639 |
| | | V3 200 trs/min 5kg/h | délité | | | |
| | GF 09 | V1 80 trs/min | 80 | 260 | 1028 | 787 |
| | | V2 120 trs/min | 80 | 250 | 965 | 768 |
| T3 | | V3 200 trs/min | 80 | 270 | 1110 | 818 |
| | | V3 200 trs/min 5kg/h | 80 | 260 | 994 | 761 |
| | GF21 | V2 120 trs/min | 78 | 260 | 889 | 716 |
| | GF 09 | V1 80 trs/min | 78 | 270 | 1127 | 874 |
| | | V2 120 trs/min | 80 mm | 270 | 1114 | 821 |
| | | V3 200 trs/min | 80 | 260 | 1197 | 916 |
| T4 Compression Piston | | V3 200 trs/min 5kg/h | 80 | 250 | 918 | 731 |
| | | V3 200 trs/min 5kg/h | 78 | 265 | 1054 | 832 |
| | GF21 | V1 80 trs/min | 78 | 280 | 927 | 693 |
| | | V2 120 trs/min | 80 | 263 | 911 | 689 |
| | | V2 120trs/min bis | 78 | 265 | 916 | 723 |
| | | V3 200 trs/min | 78 | 260 | 938 | 755 |
| T5 Compression Piston | GF9 | V1 80 trs/min | 78 | 275 | 1097 | 835 |
| | | V2 120 trs/min | 80 | 265 | 1086 | 815 |
| | | V3 200 trs/min | 80 | 265 | 1071 | 804 |
| | GF21 | V2 120 trs/min | 80 | 275 | 997 | 721 |
| | | V3 200 trs/min | 78 | 275 | 983 | 748 |
| | | V3 200 trs/min bis | 78 | 270 | 977 | 757 |
| T6 Compression | GF21 | V1 80 trs/min | 78 | 270 | 1010 | 783 |
| | | V2 120 trs/min | 78 | 265 | 910 | 719 |
| T7 | G9 | V4 35 trs/min | 80 | 270 | 1191 | 878 |

La masse volumique des bûches dépend tout d'abord du système de tassage (valeur plus faible pour tassage manuel par rapport au tassage mécanique). Ensuite, nous constatons que le GF21 est moins dense que le GF9 à même condition opératoire, sans doute pas assez de cire pour le GF21 pour combler le volume interstitiel du marc de café. La conséquence peut être l'incorporation d'air pour la formulation GF21 (à confirmer).

La mise en oeuvre industrielle a aussi mis en évidence que le taux d'humidité du marc est important :
- au-delà de 20 %, et même de 15% : la combustion est moins bonne.
- en deçà de 10% : quand le marc est trop sec, la cire ne se limite pas à enrober les particules de marc mais pénètre au coeur de la particule de marc vidée de son eau intérieure stoppant ainsi le processus de cohésion de la matière (si la cire est à l'intérieur, elle ne joue plus son rôle de colle à l'extérieur).

La granulométrie du marc peut être entre 300 microns et 600 microns. Préférentiellement, la dispersion de la granulométrie est de 50% du marc mesurant au moins 500 microns, pour éviter un excès de particules fines qui empêchent la cohésion).

On note que la cire a un rôle d'agent de cohésion, de facilitateur de combustion et de combustible.

La pression de l'extrusion est, par exemple, de 1,5 bars.

Les tests de combustion ont montré que les bûches à base de marc de café génèrent beaucoup moins d'imbrûlés CO que les bûches de bois (de 70 à 80%).

La teneur minimale de cire est de 27 % en poids pour obtenir une bonne cohésion et dureté de la bûche, le reste étant préférentiellement du marc de café faiblement humide. Cette composition est exempte de fibres cellulosiques.

La quantité de monoxyde de carbone émise lors de la combustion de la bûche est limitée. De plus, à taux d'humidité identique, comparé au bois, le marc de café dégage 22% de PCI (Pouvoir de Chauffe Inférieur) supplémentaire

Le procédé de fabrication d'une bûche pour une telle composition consiste en une préparation du marc afin de disposer d'un marc comprenant un taux d'humidité compris entre 10 et 20%, plus particulièrement entre 12 et 15%.

Cette préparation du marc par une phase de séchage, permet de disposer d'une matière première homogène en siccité.

De plus, le marc, au-delà de cette plage de siccité, génère de la fumée et diminuer le pouvoir calorifique en absorbant une partie de cette énergie pour la vaporisation de l'eau contenue.

Le séchage doit être contrôlé afin de limiter la capacité d'absorption du marc.

Le procédé consiste à réaliser un mélange intime de la composition à partir des composés par extrusion.

Dans des modes de réalisation, le procédé consiste à prévoir au moins deux zones de chauffage Z1 et Z2 : une première zone Z1 qui consiste à chauffer dans une plage de 25 à 30°C pour homogénéiser, puis à une température Z2 comprise entre 90 à 110°C supérieure à la température de fusion de la cire, pour assurer un pelliculage des grains.

L'extrudeuse engendre une pression interne comprise entre 1 et 2 bars.

Le marc obtenu comporte ainsi des particules de marc qui sont imprégnées mais aussi enrobées d'un mélange homogène de l'agent de combustion et de l'agent de cohésion régulateur de combustion. Les particules n'ont donc pas absorbé intégralement l'agent de combustion et la cohésion de la bûche est suffisante pour assurer une très bonne tenue mécanique de la bûche.

L'extrudeuse remplit un moule en sortie avec la composition ainsi réalisée en sortie d'extrudeuse. De façon complémentaire, le moule est vibré ou choqué afin d'obtenir la densité requise et d'éliminer l'air contenu dans ladite bûche.

La durée de refroidissement est supérieure à 45 mn plutôt de l'ordre de 20 mn afin de conférer à la bûche une cohésion et donc une résistance mécanique suffisante pour qu'elle se tienne mais sans attendre une rigidification trop importante de la composition qui conduirait à des frottements importants sur le moule nuisant au démoulage et pouvant conduire à la rupture de la bûche.

Une telle bûche peut se présenter sous forme d'un cylindre ou d'un parallélépipède de dimensions extérieures de l'ordre de 80 mm de diamètre et 270 mm de longueur pour une bûche cylindrique.

Afin de permettre une combustion optimisée, des modes de réalisation du procédé prévoient la réalisation d'un logement débouchant en partie médiane de ladite bûche de façon à augmenter la surface de combustion d'une part et à limiter l'épaisseur de composition combustible à des épaisseurs comprises entre 25 et 35 mm., d'autre part.

Ceci permet d'obtenir une combustion complète des matières constituant la composition et de générer un poids de cendres extrêmement limité.

C'est ainsi qu'une bûche de 1,5 kg selon la présente invention génère un poids de cendres de 15 g seulement.

D'autres agencements géométriques comme des rainures peuvent permettre d'atteindre :
- une durée de combustion est de 140 mn avec une durée de flammes de 130 mn.,
- une hauteur de flammes régulée comme la phase de combustion, avec des flammes d'une hauteur de 40 cm à 60 cm pendant 90 mn.

De telles bûches peuvent être stockées dans des conditionnements en papier simple car la bûche selon l'invention ne montre pas de reprise d'humidité en milieu normalement humide.

La bûche objet de la présente invention présente de nombreux avantages et peut être allumée par la présence d'une flamme, sans nécessiter la présence d'un autre combustible (pétrole, allume-feux, papier, carton, charbon ou bois).

Une telle bûche peut être réalisée en plus petits volumes ou sciée afin de réaliser des allume-feux tout à fait sécuritaires et écologiques.

Ces allume-feux peuvent être utilisés notamment pour les barbecues et ils ne présentent aucune odeur de produit pétrolier et surtout évite tout risque d'explosion ou d'allumage instantané mal maîtrisé.

## Revendications

1. Procédé de fabrication d'une bûche combustible à partir d'une composition granulaire comportant du marc de café, **caractérisé en ce qu'**il comporte :
- une étape (215) de mélange de grains de marc de café avec un liant solide ou pâteux à 20 °C et
- une étape (220) d'imprégnation par liquéfaction du liant à une température supérieure à sa température de fusion et pendant une durée inférieure à la durée d'imprégnation du coeur d'au moins 50 % en masse des grains de marc de café.

2. Procédé selon la revendication 1, dans lequel l'étape d'imprégnation comporte :
- une étape d'extrusion, en mettant en oeuvre une extrudeuse comportant, sur au moins une vis, une partie amont et une partie avale dans le sens de déplacement de la composition et
- une étape de chauffage pour chauffer la composition granulaire présente dans l'extrudeuse à proximité de la partie avale à une température supérieure à la température de la composition granulaire à proximité de la partie amont.

3. Procédé selon la revendication 2, qui comporte, de plus, une étape de mise sous pression de la composition granulaire présente dans l'extrudeuse à proximité de la partie avale à une pression supérieure à la pression à laquelle est soumise la composition granulaire à proximité de la partie amont.

4. Procédé selon l'une des revendications 2 ou 3, dans lequel, au cours de l'étape d'extrusion, on met en oeuvre une extrudeuse comportant, sur au moins une vis, la partie amont présentant un premier pas de vis et la partie avale présentant un deuxième pas de vis inférieur au premier pas de vis.

5. Procédé selon l'une des revendications 2 à 4, qui comporte au moins cinq résistances de chauffages, l'étape de chauffage appliquant, de l'amont vers l'aval, des températures dans les plages de températures successives suivantes :
25°C à 40 °C,
50 °C à 95 °C,
80 °C à 105 °C,
60 °C à 110 °C et
110 °C à 120 °C.

6. Procédé selon l'une des revendications 2 à 4, qui comporte au moins quatre résistances de chauffages, l'étape de chauffage appliquant, de l'amont vers l'aval, des températures dans les plages de températures successives suivantes :
25°C à 40 °C,
50 °C à 75 °C,
80 °C à 95 °C et
110 °C à 120 °C.

7. Procédé selon l'une des revendications 1 à 6, dans lequel l'étape de mélange comporte une étape de dosage de la composition granulaire selon la répartition en masse de 55 à 65 % de marc sec à 12% à 15 % d'humidité et 30 à 40 % de liant.

8. Procédé selon l'une des revendications 1 à 7, dans lequel, au cours de l'étape de mélange, la majorité, en masse des grains de marc sec présente une granulométrie supérieure à 500 microns.

9. Procédé selon l'une des revendications 1 à 8, qui comporte une étape (230) de mise en forme finale avec formation de rainures et/ou d'ergots à la surface de la bûche et/ou création d'une ouverture traversante axiale.

10. Dispositif de fabrication d'une bûche combustible à partir d'une composition granulaire comportant du marc de café en mettant en oeuvre le procédé selon l'une des revendications 1 à 9, qui comporte :
- un moyen de mélange de grains de marc de café avec un liant solide ou pâteux à 20 °C et
- un moyen d'imprégnation par liquéfaction du liant à une température supérieure à sa température de fusion et pendant une durée inférieure à la durée d'imprégnation du coeur d'au moins 50 % en masse des grains de marc de café.

11. Dispositif selon la revendication 10, dans lequel le moyen d'imprégnation comporte :
- une extrudeuse comportant, sur au moins une vis, une partie amont et une partie avale, dans le sens de déplacement de la composition granulaire et
- un moyen de chauffage pour chauffer la composition granulaire présente dans l'extrudeuse à proximité de la partie avale à une température supérieure à la température de la composition granulaire à proximité de la partie amont.

12. Dispositif selon la revendication 11, qui comporte, de plus, un moyen de mise sous pression de la composition granulaire présente dans l'extrudeuse à proximité de la partie avale à une pression supérieure à la pression à laquelle est soumise la composition granulaire à proximité de la partie amont.

13. Dispositif selon l'une des revendications 11 ou 12, dans lequel l'extrudeuse comporte, sur au moins une vis, la partie amont présentant un premier pas de vis et la partie avale présentant un deuxième pas de vis inférieur au premier pas de vis.

14. Bûche obtenue par la mise en oeuvre du procédé selon l'une des revendications 1 à 9 ou par la mise en oeuvre du dispositif selon l'une des revendications 10 à 13, qui comporte du marc de café mis en forme cylindrique.

15. Bûche selon la revendication 14, qui présente une densité comprise entre 0,9 et 1,1.
